# EUROPEAN PATENT SPECIFICATION

(11) **EP 4 050 460 B1**
(45) Date of publication and mention of the grant of the patent: **16.07.2025**
(21) Application number: 21159053.4
(22) Date of filing: 24.02.2021
(51) Int. Cl.: G06F 3/01, G01S 13/87, G01S 13/06, G01S 13/66, G01S 7/41, G01S 13/58, G01S 13/72

(54) **RADAR-BASED OBJECT TRACKING USING A NEURAL NETWORK**
RADARBASIERTE OBJEKTVERFOLGUNG UNTER VERWENDUNG EINES NEURONALEN NETZES
SUIVI D'OBJET PAR RADAR À L'AIDE D'UN RÉSEAU DE NEURONES ARTIFICIELS

(43) Date of publication of application: 31.08.2022
(73) Proprietor: Infineon Technologies AG, 85579 Neubiberg (DE)
(72) Inventor: PAVLOV, Ivan, 81379 München (DE); SANTRA, Avik, 81541 München (DE)
(74) Representative: Kraus & Lederer PartGmbB

(56) References cited:
- CN-A- 111 695 420
- US-A1- 2020 302 210
- US-A1- 2020 355 817
- US-A1- 2023 067 322
- US-B2- 9 317 150

## Description

### TECHNICAL FIELD

Various examples of the disclosure are concerned with tracking a 3-D position of a moveable target based on a radar measurement dataset.

### BACKGROUND

Various use cases are known that rely on tracking a 3-D position of a target. Example use cases include human-machine interfaces (HMIs): here, the 3-D position of a user-controlled object implementing the target can be tracked. It can be determined whether the target performs a gesture. It could also be determined whether the target actuates an input element of a user interface (UI).

US 2020/355817 A1 discloses a radar system than can recognize gestures. Two-Dimensional gestures usable with touch-sensitive displays can be recognized. Touch-free control of a smart device is provided.

Further related radar systems and technologies are disclosed in US 2020/302210 A1, CN 111695420 A and US 9,317,150 B2.

### SUMMARY

Accordingly, there may be a need for determining a robust and accurate estimate of the position of a movable target.

This need is met by the features of the independent claims. The features of the dependent claims define embodiments.

Various examples of the disclosure generally describe techniques of using a neural network algorithm for processing a radar measurement dataset such as a 3-D point cloud or a 2-D map generated by a radar sensor. The neural network algorithm may provide an output dataset indicative of a position estimate of a target such as, e.g., a hand, a part of a hand - e.g., a finger or a palm - or a handheld object. In some examples, the neural network algorithm may provide an output dataset that classifies a gesture performed by the target.

Next, some examples for possible implementations of the disclosure are provided.

A computer-implemented method according to claim 1 includes, in particular, obtaining a radar measurement dataset. The radar measurement dataset is indicative of depth positions of data points of a scene. The scene is observed by a radar unit. The scene includes a target. The target is selected from the group consisting of a hand, a part of a hand, and a handheld object. The method also includes processing the radar measurement dataset using at least one neural network algorithm, to obtain an output data set. The output data set includes one or more position estimates of the target defined with respect to a predefined reference coordinate system. The predefined reference coordinate system is associated with the scene.

A computer program or a computer-program product or a computerreadable storage medium includes program code. The program code can be loaded and executed by at least one processor. Upon loading and executing the program code, the at least one processor performs a method. The method includes obtaining a radar measurement dataset. The radar measurement dataset is indicative of depth positions of data points of a scene. The scene is observed by a radar unit. The scene includes a target. The target is selected from the group consisting of a hand, a part of a hand, and a handheld object. The method also includes processing the radar measurement dataset using at least one neural network algorithm, to obtain an output data set. The output data set includes one or more position estimates of the target defined with respect to a predefined reference coordinate system. The predefined reference coordinate system is associated with the scene.

A computer-implemented method of performing a training of at least one neural network algorithm according to claim 11 is provided. The neural network algorithm is for processing a radar measurement dataset to obtain an output dataset. The output dataset includes one or more position estimates of a target. The method includes, in particular, processing multiple training radar measurement datasets that are indicative of depth positions of data points of the scene that is observed by a radar unit. The scene includes the target. The target is selected from the group consisting of a hand, a part of a hand, and a handheld object. The method also includes obtaining ground-truth labels for the multiple training radar measurement datasets. The ground-truth labels each include one or more positions of the target defined with respect to a predefined reference coordinate system. The predefined reference coordinate system is associated with the scene. Also, the method includes performing the training based on the multiple training radar measurement datasets and the ground-truth labels.

A computer program or a computer-program product or a computerreadable storage medium includes program code. The program code can be loaded and executed by at least one processor. Upon loading and executing the program code, the at least one processor performs a method of performing a training of at least one neural network algorithm is provided. The neural network algorithm is for processing a radar measurement dataset to obtain an output dataset. The output dataset includes one or more position estimates of a target. The method includes processing multiple training radar measurement datasets that are indicative of depth positions of data points of the scene that is observed by a radar unit. The scene includes the target. The target is selected from the group consisting of a hand, a part of a hand, and a handheld object. The method also includes obtaining ground-truth labels for the multiple training radar measurement datasets. The ground-truth labels each include one or more positions of the target defined with respect to a predefined reference coordinate system. The predefined reference coordinate system is associated with the scene. Also, the method includes performing the training based on the multiple training radar measurement datasets and the ground-truth labels.

A device includes a processor and a memory. The processor can load program code from the memory. Upon loading the program code, the processor obtains a radar measurement dataset that is indicative of depth positions of data points of a scene observed by a radar unit. The scene includes a target. The target is selected from the group consisting of a hand, a part of a hand, and a handheld object. The processor also processes the radar measurement dataset using at least one neural network algorithm to obtain an output data set. The output data set includes one or more position estimates of the target defined with respect to a predefined reference coordinate system that is associated with the scene.

A device includes means for obtaining a radar measurement dataset. The radar measurement data set is indicative of depth position of data points of a scene observed by a radar unit. The scene includes a target. The target is selected from the group consisting of a hand, a part of a hand, and a handheld object. The device also includes means for processing the radar measurement dataset using at least one neural network algorithm to obtain an output dataset. The output dataset includes one or more position estimates of the target defined with respect to a predefined coordinate system that is associated with the scene.

A device includes a module for obtaining a radar measurement dataset that is indicative of depth positions of data points of a scene. The scene is observed by a radar unit. The scene includes a target. The target is selected from the group consisting of a hand, a part of a hand, and a handheld object. The device also includes a module for processing the radar measurement dataset using at least one neural network algorithm to obtain an output data set. The output dataset includes one or more position estimates of the target defined with respect to a predefined reference coordinate system that is associated with the scene.

A device includes a processor and a memory. The device is for performing a training of at least one neural network algorithm. The at least one neural network algorithm is for processing a radar measurement dataset to obtain an output dataset including one or more position estimates of a target. The processor can load program code from the memory and execute the program code. Upon executing the program code, the processor obtains multiple training radar measurement datasets that are indicative of depth position of data points of a scene observed by a radar unit. The scene includes the target. The target is selected from the group consisting of a hand, a part of a hand, and handheld object. The processor also obtains ground-truth labels for the multiple training radar measurement datasets. The ground-truth labels each include one or more positions of the target defined with respect to a predefined reference coordinate system that is associated with the scene. The processor also performs the training based on the multiple training radar measurement data sets and the ground-truth labels.

A device includes a processor and a memory. The device is for performing a training of at least one neural network algorithm. The at least one neural network algorithm is for processing a radar measurement dataset to obtain an output dataset including one or more position estimates of a target. The device includes means for obtaining multiple training radar measurement datasets that are indicative of depth position of data points of the scene observed by a radar unit. The target is selected from the group consisting of a hand, a part of a hand, and handheld object. The device also includes means for obtaining ground-truth labels for the multiple training radar measurement datasets. The ground-truth labels each include one or more positions of the target defined with respect to a predefined reference coordinate system associated with scene. The device also includes means for performing the training based on the multiple training radar measurement data sets and the ground-truth labels.

A device includes a processor and a memory. The device is for performing a training of at least one neural network algorithm. The at least one neural network algorithm is for processing a radar measurement dataset to obtain an output dataset including one or more position estimates of a target. The device includes a module for obtaining multiple training radar measurement datasets that are indicative of depth position of data points of the scene observed by a radar unit. The target is selected from the group consisting of a hand, a part of a hand, and handheld object. The device also includes a module for obtaining ground-truth labels for the multiple training radar measurement datasets. The ground-truth labels each include one or more positions of the target defined with respect to a predefined reference coordinate system associated with scene. The device also includes a module for performing the training based on the multiple training radar measurement data sets and the ground-truth labels.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

FIG. 1 schematically illustrates a measurement setup including a radar unit configured to capture raw data of a scene including a fingertip target, the raw data being used to determine a radar measurement data set according to various examples.
FIG. 2 schematically illustrates a device according to various examples.
FIG. 3 schematically illustrates a processing flow according to various examples.
FIG. 4 schematically illustrates processing raw data acquired by a radar unit to obtain radar measurement data set according to various examples.
FIG. 5 is a flowchart of a method according to various examples.
FIG. 6 schematically illustrates a neural network algorithm according to various examples.
FIG. 7 schematically illustrates a convolution operation of a convolution layer of a neural network algorithm according to various examples.
FIG. 8 schematically illustrates a super-network having recurrent structure according to various examples.
FIG. 9 schematically illustrates a movement gesture performed by a fingertip target according to various examples.
FIG. 10 schematically illustrates a rest gesture performed by a fingertip target according to various examples.
FIG. 11 is a flowchart of a method according to various examples.
FIG. 12 is a flowchart of a method according to various examples.
FIG. 13 schematically illustrates a device according to various examples.

### DETAILED DESCRIPTION OF EMBODIMENTS

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, examples of the disclosure will be described in detail with reference to the accompanying drawings. It is to be understood that the following description of examples is not to be taken in a limiting sense. The scope of the disclosure is not intended to be limited by the examples described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques will be described that facilitate determining an estimate of a position (position estimate) of a movable target. According to the various examples described herein, it is possible to determine one or more position estimates of the target. For example, it would be possible to determine multiple position estimates associated with different points in time, i.e., a time series of position estimates. It would also be possible to determine a single position estimate at a certain point in time.

Generally speaking, the position of the target can be tracked over the course of time.

In the various examples described herein, the one or more position estimates can be defined with respect to a predefined reference coordinate system. By determining one or more position estimates of the target that are defined with respect to a predefined reference coordinate system, an increased flexibility with respect to subsequent application-specific postprocessing can be provided. In particular, various techniques are based on the finding that depending on the particular application, different post-processing may be required, e.g., different gestures may need to be classified or different interactions between a user and an HMI may need to be monitored. Accordingly, by determining the one or more position estimates of the target, various such postprocessing applications are facilitated. This is, in particular, true if compared to tracking algorithms which provide, as output data, a classification with respect to application-specific gesture classes.

As a general rule, the one or more position estimates could be defined with respect to a cartesian coordinate system or a polar coordinate system. The reference coordinate system may be defined with respect to one or more reference points, e.g., a sensor - e.g., a radar unit - used to observe a scene.

As a further general rule, a 1-D or 3-D or a 2-D position estimate may be determined. I.e., one, two or three coordinates may be used to specify the position estimate.

As a general rule, it would be possible to use a regression to determine the position estimate in a continuously-defined result space of coordinates. For instance, it would be possible to determine the position of the fingertip of a hand using continuous horizontal and vertical components. In other examples, it would be possible to use a classification to determine the position estimate in a discrete result space of coordinates. In another example, it would be possible to rely on a discrete grid representation - i.e., discretized grid cells -, e.g., associated with input elements a UI, and then determine the position to lie within one of the grid cells.

Various kinds of targets can be tracked using the techniques described herein. According to various examples, it would be possible to determine the one or more position estimates of a target such as a hand or a part of a hand or a handheld object. For example, it would be possible to determine the position estimate of a fingertip or the palm of a hand. By such techniques, it is possible to facilitate user interaction with input elements of a UI of an HMI.

According to various examples, one or more position estimates of the target can be determined based on a radar measurement dataset. A radar unit can be used to acquire raw data and the radar measurement dataset can then be determined based on the raw data.

According to the various examples disclosed herein, a millimeterwave radar unit may be used that operates as a frequency-modulated continuous-wave (FMCW) radar that includes a millimeterwave radar sensor circuit, a transmitter, and a receiver. A millimeter-wave radar unit may transmit and receive signals in the 20 GHz to 122 GHz range. Alternatively, frequencies outside of this range, such as frequencies between 1 GHz and 20 GHz, or frequencies between 122 GHz and 300 GHz, may also be used.

A radar unit can transmit a plurality of radiation pulses, such as chirps, towards a scene. This refers to a pulsed operation. In some embodiments the chirps are linear chirps, i.e., the instantaneous frequency of the chirp varies linearly with time.

A Doppler frequency shift can be used to determine a velocity of the target. Raw data provided by the radar unit can thus indicate depth positions of multiple objects of a scene. It would also be possible that velocities are indicated.

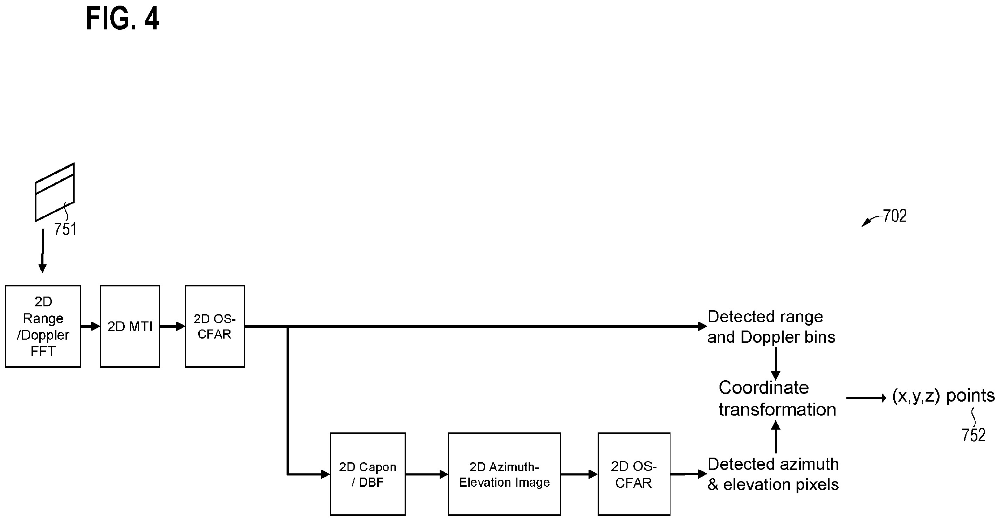

As a general rule, there are various options for processing the raw data to obtain the radar measurement dataset. Examples of such processing of raw data acquired by a radar unit are described in A. Santra, S. Hazra, Deep Learning Applications of Short-Range Radars, ArTech House, 2020. An example processing will be described later on in connection with FIG. 4.

Depending on the processing of the raw data, different forms of the radar measurement dataset can be obtained. Two possible options are disclosed in TAB. 1 below.

**TAB. 1: Options for a radar measurement dataset. Different representations of the radar measurement dataset can be generally converted into each other. According to the various techniques described herein, various representations of the radar measurement dataset can be used to determine one or more position estimate.**

| Option | Brief description | Example details |
|---|---|---|
| I | 3-D point cloud | The 3-D point cloud can include 3-D points defined in a respective coordinate system, e.g., in a cartesian coordinate system having x-y-z components, or in a cylindrical coordinate system having range-azimuth-elevation components. I.e., each point may have a 3-D position in space. |
| | | Optionally, each point may be associated with a "point brightness", e.g., indicating intensity proportional to the target response to the emitted signal. |
| II | 2-D map | A 2-D map can be similar to a 2-D image. |
| | | Here, X and Y aces may encode angles, e.g., azimuth and elevation angles of a spherical coordinate system. The position of the radar sensor can encode the origin. The pixel brightness (or generally contrast) can indicate an intensity proportional to target response to the emitted signal. |

The radar measurement dataset may not only encode depth information - as explained in connection with TAB. 1 -, but may optionally include additional information, e.g., may be indicative of a velocity of respective object points of the scene included in the radar measurement dataset. Another example for additional information could be reflectivity.

According to various examples, a machine-learning (ML) algorithm is used to obtain an output dataset that includes one or more position estimates of the target defined with respect to a predefined reference coordinate system associated with the scene that is observed by the radar unit. The ML algorithm operates based on the radar measurement dataset. The ML algorithm can thus be referred to as a ML tracking algorithm, because the position of the target is tracked.

As a general rule, output data can be used in various use cases. According to some examples, it is possible that the output data is used to control an HMI. The HMI may react to certain gestures and/or an actuation of an input element of a UI. As a general rule, a gesture can be defined by a certain movement (e.g., having a certain shape or form) and optionally velocities or accelerations performed by the target. The HMI may employ a UI. The UI may include one or more input elements that are defined with respect to the field-of-view (FOV) of the radar unit. For example, it is possible to determine, based on the output data, whether the target addresses a certain input element, e.g., by hovering without movement in an area associated with that input element. It could then be judged whether the certain input element is actuated, e.g., if the target addresses the certain input element for a sufficiently long time duration. A specific type of use case employing such an HMI would be the tracking of a palm or finger or a handheld pointing device (such as a stylus) on and above a touchscreen of an infotainment system or a screen for ticket machines for touchless sensing.

An example implementation of the ML algorithm is a neural network algorithm (hereinafter, simply neural network, NN). An NN generally includes a plurality of nodes that can be arranged in multiple layers. Nodes of a given layer are connected with one or more nodes of a preceding layer at their input, and one or more nodes of a subsequent layer. Skip connections between non-adjacent layers are also possible. Such connections are also referred to as edges. The output of each node can be computed based on the values of each one of the one or more nodes connected to the input. Nonlinear calculations are possible. Different layers can perform different transformations such as, e.g., pooling, max-pooling, weighted or unweighted summing, non-linear activation, convolution, etc.

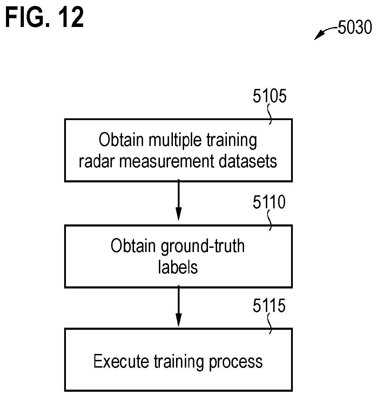

The calculation performed by the nodes are set by respective weights associated with the nodes. The weights can be determined in a training of the NN. For this, an iterative numerical optimization can be used to set the weights. A loss function can be defined between an output of the NN in its current training state and a ground truth label; the training can then minimize the loss function. Details with respect to the training will be described later on in connection with FIG. 12.

More specifically, the training can set the weights so that the NN can extract the position of the target from a noisy representation of the scene; for instance, the target may be a fingertip or a handheld object such as a stylus and the scene may include the entire hand as well as scene clutter and/or measurement noise. This can occur due to inaccuracies of the measurement process, inaccuracies in the calibration, and/or inaccuracies in the processing of raw data. During the training phase, the NN obtains an ability to compensate some inaccuracies of the radar chip calibration and processing of the raw data.

In particular, it has been observed that using an NN for tracking a target can have benefits if compared to conventionally parametrized algorithms. In particular, it would be possible to flexibly adjust the NN to different types of radar units. Typically, different types of radar units can exhibit different measurement noise and/or clutter. The signal characteristics can vary from radar unit to radar unit. Accordingly, by being able to dynamically (re-)train a NN for different types of radio units, and overall increased accuracy can be obtained.

Various options are available for implementing a NN. Some of these options are summarized in TAB. 2.

**TAB. 2: Various examples for NN that can be used according to the examples disclosed herein to determine an output dataset that is indicative of one or more positions of the target.**

| | Brief description | Example details |
|---|---|---|
| I | Convolutional NN (CNN) | A CNN includes layers that perform convolutions between the values of a set of input nodes and a kernel. This is discussed in further detail below in connection with FIG. 7. |
| | | The kernel can be determined during the training. |
| | | The convolution operations can reduce the size of input data and efficiently extract relevant information in a form of an aggregated feature vector. |
| | | A convolution operation can exploit fixed local relationships between points such as in a pixel grid of RGB images. |
| | | Therefore, this approach is suitable for 2-D maps, cf. TAB. 1, example II. |
| | | Examples of CNNs that could be used according to the various examples described herein are described in Albawi, S., Mohammed, T. A., & Al-Zawi, S. (2017, August). Understanding of a convolutional NN. In 2017 International Conference on Engineering and Technology (ICET) (pp. 1-6). IEEE. |
| II | Independent points approach | Here, data points of the radar measurement dataset are implemented by points of a 3-D point cloud - cf. TAB. 1, example I -; the points of the 3-D point cloud are processed as independent entities but their relative positions in 3-D space are used to encode local region patterns. |
| | | This typically includes three major steps: sampling, grouping, and feature aggregation. These steps are applied repeatedly in multiple iterations. |
| | | During sampling, centroids of local regions of the 3-D point cloud are selected. Then grouping is applied to determine neighborhood of closest points for centroids. After that, multi-layer perceptions (MLP) with learnable parameters (possibly together with other operations) processes centroids and respective neighborhood to aggregate information from the entire point cloud in a form of a global feature vector. Finally, a regression or classification layer uses this feature vector to calculate the predicted position of the target. |
| | | An example implementation is described in Qi, C. R., Su, H., Mo, K., & Guibas, L. J. (2017). Pointnet: Deep learning on point sets for 3d classification and segmentation. In Proceedings of the IEEE conference on computer vision and pattern recognition (pp. 652-660). |
| III | Graph CNN | A Graph CNN relies on graph representation of data points of the radar measurement dataset where edges define connections between neighboring points of a 3-D point cloud - cf. TAB. 1, example I. |
| | | Each point has an associated feature vector. The main feature of the Graph CNN is the graph convolution operation during which the point's feature vector is updated based on feature vectors of connected neighboring points and learnable parameters. After a series of graph convolution operations, a pooling operation is applied to aggregate a global feature vector of the whole point cloud and then predict a position of the fingertip. |
| | | See, e.g., Wang, Y., Sun, Y., Liu, Z., Sarma, S. E., Bronstein, M. M., & Solomon, J. M. (2019). Dynamic graph cnn for learning on point clouds. Acm Transactions On Graphics (tog), 38(5), 1-12. |

According to some examples, it would be possible that multiple NNs are combined in a super-network. The super-network can have a recurrent structure. Recurrent NN (RNNs) allow outputs of a previous iteration - e.g., associated with data points of a previous point in time - to be used as inputs in a subsequent iteration while having hidden states. The super-network can include multiple cells. Each cell can receive an input of data points associated with a respective point in time, as well as an output of a further cell, e.g., a cell that receives, as a respective input, data points associated with an earlier and/or later point in time. This may help to enforce inter-frame consistency, e.g., avoid sudden jumps or discontinuous behavior of the position estimates. For example, the radar measurement dataset can include a time series of frames, each frame being indicative of depth positions of the data points of the scene at a respective point in time. For example, each frame can include a 2-D map or a 3-D point cloud, cf. TAB. 1. The output dataset can then include a time series of multiple position estimates of the target, the time series of the multiple position estimates being associated with the time series of the frames.

According to various examples described herein, it would be possible that the RNN can include a self-attention module as a part of an encoder-decoder transformer architecture. Such architecture is, in general, known from: Meinhardt, Tim, et al. "TrackFormer: Multi-Object Tracking with Transformers." arXiv preprint arXiv:2101.02702 (2021).The self-attention module can be used to model a temporal interaction between the frames of the time series of frames. Generally, the self-attention module can determine relationships between the data points of the scene at multiple points in time. Also, it would be possible to infer changes between the position estimates of the target at the multiple points in time. Thereby, it would be possible to infer a velocity estimate of the target. The output dataset can be augmented with such velocity estimates that are inferred by the RNN.

There are various implementations of RNNs known in the prior art and it is possible to use such RNNs in the various examples described herein. For instance, the RNN could be selected from the group consisting of: a Long Short Term Memory (LSTM) RNN, a Gated Recurrent Unit (GRU) RNN, and a bidirectional RNN, an autoregressive RNN with a Transformer encoder-decoder.

The LSTM RNN has feedback connections between its cells. For instance, the cell of an LSTM RNN can remember values over certain time intervals. A forget gate can be defined that deletes data. An example of the LSTM RRN is described in: Gers, Felix A., Nicol N. Schraudolph, and Jürgen Schmidhuber. "Learning precise timing with LSTM recurrent networks." Journal of machine learning research 3.Aug (2002): 115-143.

An example of the GRU RNN is described in Chung, Junyoung, et al. "Empirical evaluation of gated recurrent NNs on sequence modeling." arXiv preprint arXiv:1412.3555 (2014). The GRU RNN does not require memory cells as the LSTM RNN.

Bidirectional RNNs are described in Jagannatha, Abhyuday N., and Hong Yu. "Bidirectional RNN for medical event detection in electronic health records." Proceedings of the conference. Association for Computational Linguistics. North American Chapter. Meeting. Vol. 2016. NIH Public Access, 2016.

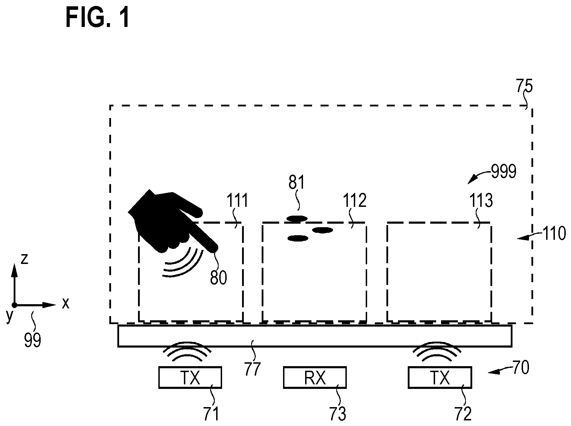

FIG. 1 schematically illustrates aspects with respect to a measurement setup.

A radar unit 70 includes two transmitters 71, 72 that can transmit electromagnetic waves towards a scene. A receiver 73 of the radar unit 70 can detect reflected electromagnetic waves backscattered from objects in the scene. A FOV 75 of the radar unit 70 is illustrated. The FOV 75 is dimensioned so that the radar unit 70 can observe a scene 100. Next, details with respect to the scene 100 will be explained.

Illustrated in FIG. 1 is a target 80, here a fingertip of a hand of a user. Using a NN, it is possible to obtain an output dataset that includes one or more position estimates of the fingertip target 80 defined with respect to a reference coordinate system 99 that is associated with the scene 100. In particular, it is possible that the NN is trained to denoise the scene 100 by filtering scene clutter 81 of the scene 100 and/or noise associated with the measurement process of the radar unit 70. I.e., the output dataset can be indicative of the one or more position estimates, yet with suppressed noise and/or scene clutter 81.

In the example of FIG. 1, a system 999 includes the radar unit 70, as well as a display 77. A UI 110 includes multiple input elements 111-113 that are at predefined positions with respect to the display 77 or, more generally, with respect to the reference coordinate system 99. For instance, a graphical illustration can be depicted in the sections of the display 77 associated with a respective one of the input elements 111-113. A user may point towards the respective one of the input elements 111-113 to actuate the respective input element 111-113. Such actuation can then trigger a function that may be associated with a semantic context of the graphical illustration. This is only one example for an implementation of the UI 110.

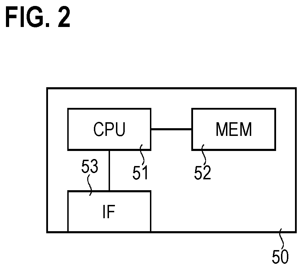

FIG. 2 schematically illustrates aspects with respect to a device 50 that can be used according to the various examples disclosed herein for tracking a position of a target such as the target 80 of FIG. 1. The device 50 includes a processor 51 and a memory 52 and an interface 53 to communicate with other devices, e.g., a radar unit such as the radar unit 70 or a control device of an HMI. The processor 51 can load program code from the memory 52 and execute the program code. Upon executing the program code, the processor 51 can perform techniques as described herein, such as: obtaining a radar measurement dataset that is indicative of depth positions of data points of a scene; processing the radar measurement dataset, e.g., using a NN, to thereby obtain an output dataset that includes one or more positions of the target; training the NN; postprocessing the output dataset, e.g., to classify a movement of the target; controlling an HMI; implementing an HMI; preprocessing the radar measurement dataset, e.g., to discard/remove velocities before providing the radar measurement dataset as an input to the NN; processing raw data of a radar unit to determine a radar measurement dataset; etc.

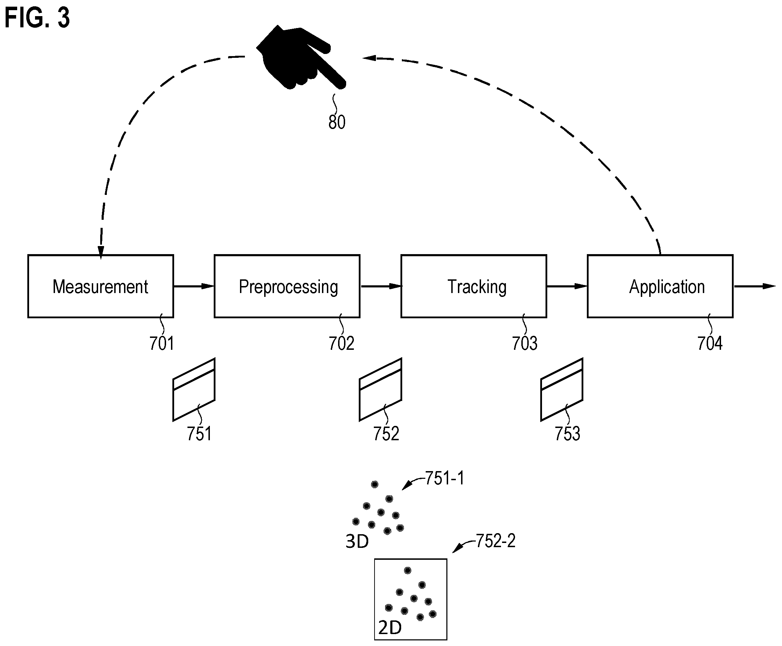

FIG. 3 schematically illustrates signal processing according to various examples. FIG. 3 illustrates a processing flow of multiple logical operations.

At box 701, a radar unit - e.g., the radar unit 70 of FIG. 1; also cf. TAB. 1 - is used to acquire raw data 751. The raw data 751 is suitable for determining the 3-D position of the target 80. Thus, a Z-position of the target 80 can be measured (cf. reference coordinate system 99 in FIG. 1).

The raw data 751 is then pre-processed at box 702, to obtain a radar measurement dataset 752; the radar measurement dataset includes depth data, i.e., is indicative of depth positions of data points of a scene observed by the radar unit 70. Example implementations of the radar measurement dataset 752 have been discussed in connection with TAB. 1 and include a 3-D point cloud 752-1 and a 2-D map 752-2.

The radar measurement dataset 752 can be subject to measurement noise stemming from imperfections of the radar unit 70, e.g., noise associated with the measurement process, an imperfect calibration, etc. The radar measurement dataset 752 can alternatively or additionally include scene clutter, e.g., originating from multi-path reflections, background objects, etc.

Next, tracking of the 3-D position of the target is performed at box 703. An NN - cf. TAB. 2 - can be employed. Thereby, an output dataset 753 is obtained. The output dataset comprises one or more position estimates of the target 80. The measurement noise can be reduced.

A use-case specific application may be executed at box 704 based on the output dataset 753.For example, gesture classification could be executed based on the one or more position estimates. For example, a UI including multiple input elements can be used to control an HMI (cf. FIG. 1). It is possible that the application provides an output to the user such that a continuous usermachine interface - illustrated in FIG. 3 by the dashed arrows - is implemented.

FIG. 4 illustrates details with respect to an example implementation of box 702. The raw data 751 corresponds to multiple range Doppler maps obtained from multiple receivers of the radar unit 70. The range-Doppler map/image is generated by performing FFT along fast-time and slow-time of the received intermediate frequency signal. Following which 2-D Moving Target Indicator (2D MTI) is implemented as first order final impulse response (FIR) filter removing the background clutter and reflections from static targets. The OS-CFAR detection algorithm detects the range-Doppler bins that are indicative of a target(s). Once the range-Doppler bins are detected, 2D digital beamforming (e.g., 2-D Capon) is applied to transform the data across virtual channels from rectangular array configuration into 2-D azimuth-elevation image. Then, OS-CFAR is applied to detect corresponding azimuth and elevation pixels which are representative of the same target(s). Using the detected azimuth, elevation values and the corresponding range values, and applying the polar coordinate conversion leads to (x,y,z) point clouds.

Hence, the radar measurement dataset 752 is obtained. In the illustrated example a vector is obtained that specifies distance/range, angle and speed of a center of the target, cf. TAB. 1, example II. It would also be possible to obtain a 3-D point cloud.

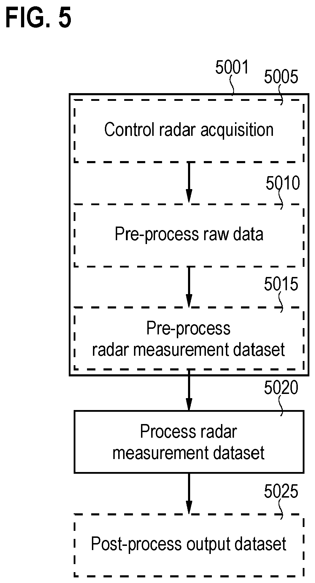

FIG. 5 is a flowchart of a method according to various examples. For example, the method of FIG. 5 could be executed by the processor 51 upon loading program code from the memory 52. Optional boxes are labeled with dashed lines in FIG. 5.

The method of FIG. 5 illustrates aspects with respect to inference using one or more NNs. In particular, one or more position estimates of a tracked target are inferred. The one or more NNs are pre-trained. For instance, multiple NNs may be included in cells of an RNN super-network.

At 5001, a radar measurement dataset is obtained. For example, a radar measurement dataset 752 as discussed in connection with FIG. 3 could be obtained.

Obtaining a radar measurement dataset may include loading the radar measurement dataset from a memory.

Obtaining the radar measurement dataset may include receiving the radar measurement dataset via an interface from a radar unit (cf. FIG. 2: interface 53).

Obtaining the radar measurement dataset at box 5001 may, e.g., include controlling radar acquisition at box 5005. For this, control data may be transmitted to a radar unit to trigger a radar measurement (cf. FIG. 3: box 701), e.g., via an interface such as the interface 53 in FIG. 2.

Obtaining the radar measurement dataset may optionally include processing raw data obtained from a radar unit at box 5010. An example implementation of such processing has been discussed in connection with FIG. 4, and FIG. 3: box 702.

Obtaining the radar measurement dataset may include pre-processing the radar measurement dataset at box 5015. For example, it would be possible to remove velocities from the radar measurement dataset. Sometimes, it would be possible that the radar measurement dataset is indicative of velocities of data points of the scene. Such velocities could be obtained from Doppler frequency shifts. It would be possible to remove such velocities.

Such techniques focus on utilizing implicit non-radial velocity components instead of explicit radial components and therefore don't rely on Doppler frequency shifts.

For instance, often the radar measurement dataset may only be indicative of a radial velocity, i.e., a component of the velocity towards or away from the transmitter of the radar unit. Non-radial components may not be indicated, since they cannot be observed by the radar measurement process. On the other hand, for some use cases, such non-radial components may be of particular interest. Accordingly, it may be beneficial to altogether remove velocities from the radar measurements that and then rather infer velocities when processing the radar measurement dataset using at least one NN. Then, a higher accuracy can be obtained in the tracking of the position. The tracking can be particularly robust. Training of the at least one NN can be simplified, because the dimensionality of the radar measurement dataset can be reduced.

At box 5020, the radar measurement dataset - that may or may not be indicative of velocities of the data points of the scene, as explained above in connection with box 5015 - is processed using at least one NN to thereby obtain an output dataset (cf. FIG. 3: box 703).

In some examples, the output dataset could be indicative of a gesture classification. I.e., one or more identifiers of one or more gestures selected from a predefined plurality of gesture classes could be included in the output dataset.

In other examples, the output dataset may include one or more position estimates of the target. The one or more position estimates are defined with respect to a predefined reference coordinate system associated with the scene. This means that the one or more position estimates may not yet be classified with respect to a predefined gesture classes. This provides for increased flexibility in the post-processing.

It is, in particular, possible that the output dataset is indicative of multiple position estimates, thereby specifying a time dependency of the location of the target. The target may be at rest in which case the multiple position estimates do not deviate significantly; or may be performing a movement.

It would be optionally possible to post-process the output dataset at box 5025. Application-specific post-processing is possible (cf. FIG. 3: box 704). For instance, it would be possible to post-process the output dataset using a classification to identify a gesture from multiple predefined gesture classes. I.e., it would be possible to post-process the output dataset to classify the one or more position estimates and optionally velocity estimates with respect to predefined gesture classes.

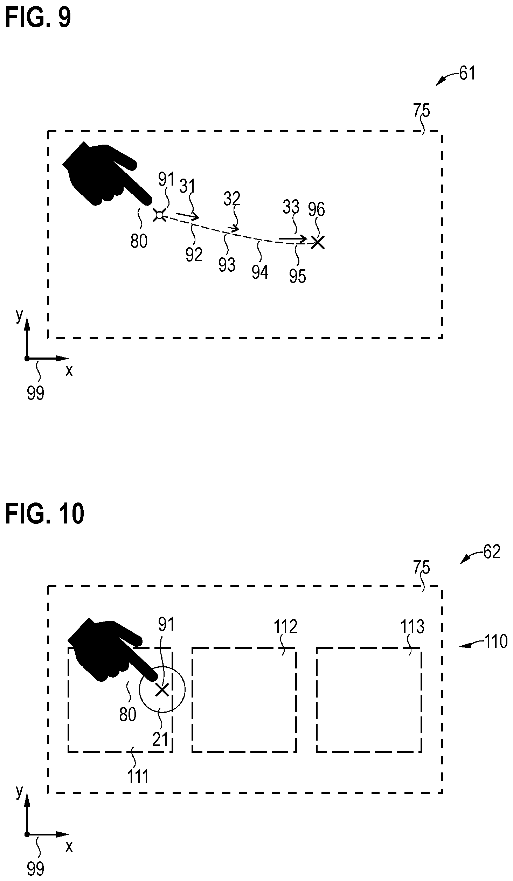

As a general rule, there can be movement gestures or rest gestures. An example of a rest gesture would be a static rest of the target at or above an input element of a UI. Here, the target does not move or only move slightly with respect to the dimensions of the input element. A respective example will be described later on in connection with FIG. 10. Examples of movement gestures would be: swipe gesture, e.g., a directional swipe; pinch gesture; double-click gesture; etc. Details with respect to classifying a movement of the target will be described later on in connection with FIG. 9.

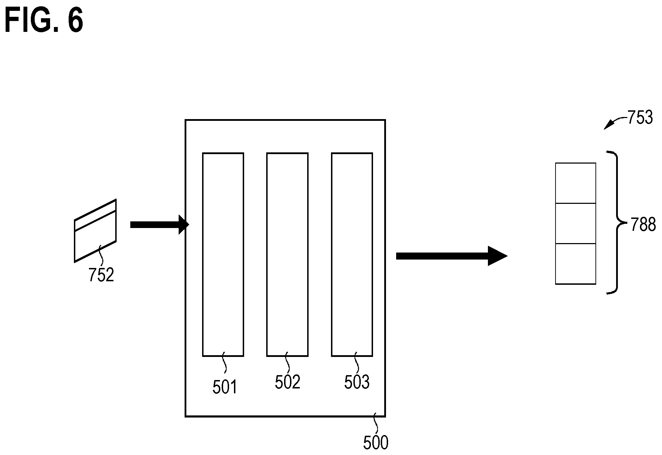

Examples of NNs have been discussed in connection with FIG. 2. An example NN 500 is also illustrated in FIG. 6. Here, the radar measurement dataset 752 is provided to the NN 500 which includes multiple layers 501-503. These layers can perform operations, e.g., to reduce a dimensionality (encoding), to thereby obtain a feature vector of reduced dimensionality that implements the output dataset 753. The feature vector specifies the position estimate 788. An output layer may be a regression layer or a classification layer, e.g., to provide the one or more position estimates using discretized or continuous coordinates defined with respect to the reference coordinate system. The discretized coordinates may be defined with respect to input elements of a UI, such as the input elements 111-113.

The feature vector indicative of the position estimate 788 in the illustrated example has three entries, i.e., encodes a 3-D position estimate, e.g., in a Cartesian coordinate system or another coordinate system and using continuous coordinates. This is only one option. In another option, it would be possible that the feature vector has 1-D 2-D dimensionality, e.g., where discretized coordinates are used that may encode a particular input element is encoded addressed by the target 80.

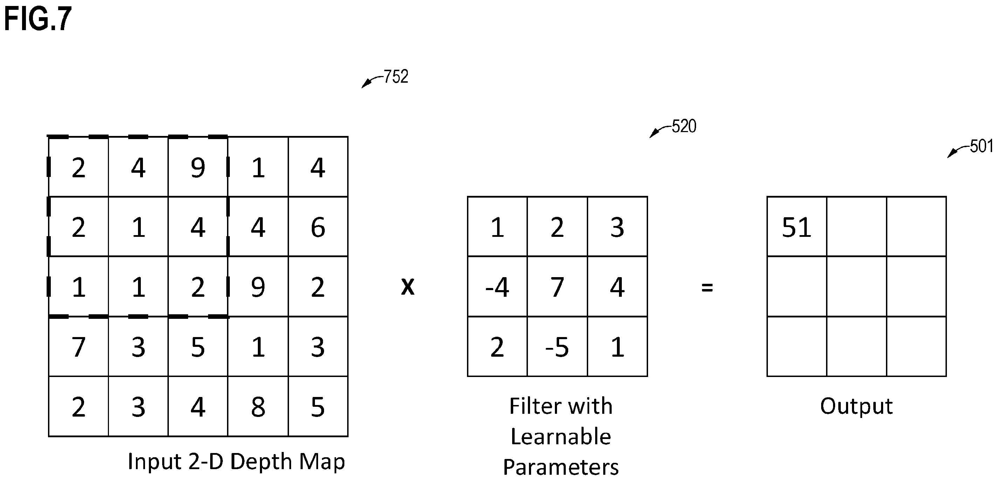

FIG. 7 schematically illustrates aspects with respect to a CNN, cf. TAB. 2: example I. Here, the radar measurement dataset 752 is provided as a 2-D map. A first layer of the CNN is then obtained by performing convolutions between the radar measurement dataset 752 and a kernel 520.

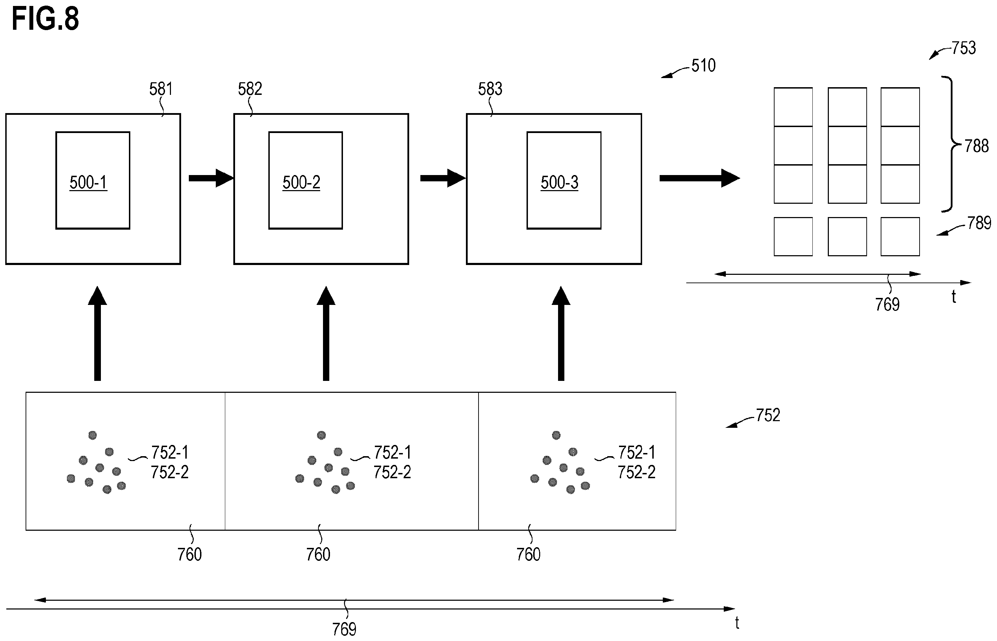

FIG. 8 schematically illustrates the radar measurement dataset 752 including a time series of frames 760. Each frame 760 is indicative of the depth position of respective data points of the scene at the respective point in time. For example, each frame 760 could include a 2-D map 752-2 or a 3-D point cloud 752-1 encoding depth positions of data points of the scene 100 at a respective point in time, cf. TAB. 1.

Specifically, FIG. 8 illustrates an acquisition interval 769 in time domain over the course of which the respective radar measurements are acquired.

In the illustrated example, a super-network 510 has recurrent structure and includes multiple cells 581-583. Each one of the multiple cells 581-583 can include a respective NN 500-1 - 500-3, e.g., one of the NNs as discussed in connection with TAB. 1. Each cell receives, as a further input, an output of a preceding cell: this is the recurrent structure. There could also be feedback connection (not shown in FIG. 8).

Then, the output dataset 753 then includes a time series of multiple position estimates 788 of the target 80 defined with respect to the respective predefined reference coordinate system 99. The time series of the multiple position estimates 788 is associated with a time series of frames 760, i.e., covers the same acquisition interval 769.

According to various examples, the super-network 510 can augment the output dataset 753 with inferred velocity estimates 789 of the target 80. This means that the velocity estimates 789 are not the observed Doppler velocities, but rather hidden variables inferred from the radar measurement dataset 752. As illustrated in FIG. 8, it is possible to obtain a respective velocity estimate 789 for each point in time within the acquisition interval 769. The super-network 510 thus augments the output dataset 753 accordingly.

As a general rule, it would be possible to obtain a 1-D velocity estimate, e.g., indicative of the magnitude of the velocity (cf. FIG. 8). In other examples, a 2-D or 3-D velocity estimate could be obtained that is indicative of the magnitude and direction of the velocity.

FIG. 9 schematically illustrates aspects with respect to a movement gesture 61 performed by the fingertip target 80. In the illustrated example, the fingertip target 80 performs a left-to-right swipe gesture so that over the course of time multiple positions 91-96 are adhered. For example, it would be possible to obtain the output dataset 753 including a time series of multiple position estimates 788 corresponding to the positions 91-96. The gesture 61 is also characterized by certain velocities 31-33. It would be possible that the output dataset 753 is augmented with velocity estimates 789 being indicative of the velocities 31-33 of the fingertip target 80.

In the illustrated example (but also in other examples), it would be possible that the NN used to determine multiple position estimates 788 includes a regression layer to provide the multiple position estimates 788 of the fingertip target 80 using continuous coordinates of the reference coordinate system 99. Such use of continuous coordinates of the reference coordinate system 99 can have the advantage that the postprocessing to classify the gesture can work accurately and comparably robust, specifically for movement gestures as illustrated in FIG. 9.

FIG. 10 schematically illustrates a static rest gesture 62 of the fingertip target 80. The fingertip target 80 rests in an area associated with the input element 111 of the user interface 110. A respective position 91, as well as motion blur 21 - e.g., due to measurement noise - is illustrated in FIG. 10.

In the illustrated example (but also in other examples), it would be possible that one or more position estimates 788 of the target 80 are specified by the output dataset 753 using discretized coordinates of the reference coordinate system 99. In particular, it would be possible that the discretized coordinates are associated with the input elements 111-113 of the UI 110. These input elements have predefined locations in the reference coordinate system 99. Accordingly, it would be possible to include an indicator that is indicative of a particular input element 111-113. To this end, the NN used to determine the one or more position estimates may include a classification layer to provide the discretized coordinates. This can help to quickly and reliably infer the position estimate at an accuracy tailored the application defined by the UI 110. I.e., noise can be suppressed. Sudden jumps between adjacent input elements 111-113 could be suppressed by appropriately setting properties of an RNN.

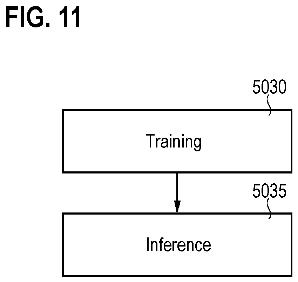

FIG. 11 is a flowchart of a method according to various examples. FIG. 11 illustrates that inference using at least one NN to determine one or more position estimates of a target at box 5035 is preceded by a training at box 5030. In the training of box 5030, one or more parameters of the at least one NN can be set. While above various examples have been described with respect to the inference at box 5035 (cf. FIG. 5), next, various aspects will be described with respect to the training at box 5030.

FIG. 12 is a flowchart of a method according to various examples. For example, the method of FIG. 12 could be executed by the processor 51 upon loading program code from the memory 52.

The method of FIG. 12 illustrates aspects with respect to training of a NN. The NN can be trained to determine one or more position estimates of a target. As such, the method of FIG. 12 can implement box 5030 of the method of FIG. 11.

For example, a training in accordance with FIG. 12 could be executed for each type of radar unit. This is because different types of radar units can exhibit different measurement noise or measurement-process related inaccuracies. By re-training the NN for different types of radar units, a tailored tracking algorithm can be provided having increased accuracy.

At box 5105, multiple training radar measurement datasets that are indicative of depth positions of data points of a scene observed by a radar unit are obtained. The training radar measurement dataset may be obtained from actual measurements or could also be synthesized.

The scene includes a target that is, according to various examples, selected from the group consisting of a hand, a part of a hand, and a handheld object.

At box 5110, ground-truth labels are obtained for the multiple training radar measurement data sets.

These ground-truth labels can each include one or more positions defined with respect to a predefined reference coordinate system.

The ground-truth labels could be obtained from manual annotation. It would also be possible to use another tracking algorithm, e.g., an interacting multi-model tracking algorithm considering, e.g., an unscented Kalman filter and a coordinated turn model; then, for low uncertainties of such algorithm, it would be possible to derive a respective ground-truth label. It would also be possible to obtain ground-truth labels from another sensor, e.g. RGB and/or depth camera, multi-view camera setup with or without markers.

Then, it is possible to perform - at box 5115 - the training based on the multiple training radar measurement data sets, as well as the ground-truth labels.

For instance, to perform the training, it would be possible to determine a difference between position estimates determined by the NN in its current training state and the positions indicated by the ground-truth labels and, based on this difference, determine a respective loss value of a predefined loss function. Then, in an iterative optimization process it is possible to reduce the loss value. Respective techniques of training are, in general, known to the skilled person.

According to various examples, it would be possible that the scene includes classes associated with background objects. In other words, the training radar measurement data sets may include such clutter. Then, it would be possible to train the NN to perform denoising by suppressing the clutter, by using the ground-truth labels that are indicative of the positions of the target, but not of the clutter.

According to various examples, it would be possible that at least some of the multiple training radar measurement datasets comprise a time series of frames that are associated with a time duration during which the target performs a static rest gesture (cf. FIG. 10 where the static rest gesture 62 has been explained; cf. FIG. 8 where a respective time series of frames 760 has been discussed). Each frame of the time series of frames can be indicative of the depth position data points of the scene at the respective point in time during the time period. Then, the depth positions of the respective data points of the scene associated with the target at the points in time can exhibit a motion blur (cf. FIG. 10, motion blur 21). The motion blur can be associated with movement of the target and and/or the scene clutter 81. Thus, by considering the ground-truth labels that remain unaffected of the motion blur, it is possible to train the NN to suppress motion blur. This can be, in particular, helpful for scenarios that aim at detecting actuation of a given input element 111-113. Here, sudden jumps due to motion blur 21 should be avoided.

More generally, it would be possible that the one or more position estimates of the target are specified using discretized coordinates of the reference coordinate system. Then, the ground-truth labels for the at least some of the multiple training radar measurement data sets can statically specify a given one of the discretized coordinates for the respective points in time.

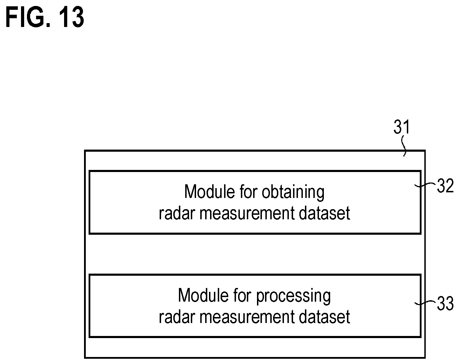

FIG. 13 schematically illustrates a device 31 according to various examples. The device 31 can be configured to perform techniques as described herein, e.g., with respect to processing a radar measurement dataset. The device 31 includes a module 32 for obtaining a radar measurement dataset. The module 32 could, e.g., implement box 701 and/or box 702 of FIG. 3. The module 32 could implement box 5001 of the method of FIG. 5.

The device 31 also includes a module 33 for processing the radar measurement dataset that is obtained at box 32. For instance, the module 33 could implement box 703 and/or box 704 of FIG. 3. Box 33 could implement box 5020 of the method of FIG. 5 and optionally box 5025.

Summarizing, radar measurement datasets are processed using a NN. The output of NN is a predicted position of a fingertip (or hand, palm) in a predefined reference coordinate system, e.g., relative to a screen or generally input elements of a UI. It would be possible to postprocess such position estimates to provide a classification of a gesture performed by the target. In other examples, it would also be possible to directly perform a gesture classification.

During the training, the NN obtains an ability to compensate, at least to some degree, for inaccuracies of the radar chip calibration and pre-processing. The NN can be quickly retrained to recognize new gesture types without method change.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, various examples have been described in which a NN is used to determine an output data set that includes one or more position estimates of the target defined with respect to a predefined coordinate system. Similar techniques may also be used to determine an output dataset that includes a gesture classification being indicative of one or more gesture selected from a predefined set of gestures. Thus, it would be possible that a NN is trained to classify gestures, i.e., skipping an intermediate determination of the one or more position estimates. NN that have been described in connection with the various disclosed examples, e.g., in connection with TAB. 2 can be readily applied to such gesture classification tasks.

## Claims

1. A computer-implemented method, comprising:
- obtaining (5001) a radar measurement dataset (752) indicative of depth positions of data points of a scene (100) observed by a radar unit (70), the scene (100) comprising a target (80), the target (80) being selected from the group consisting of a hand, a part of a hand, and a handheld object, and
- processing (5020) the radar measurement dataset (752) using at least one neural network algorithm (500, 500-1, 500-2, 500-3) to obtain an output dataset (753), the output dataset (753) comprising one or more position estimates (788) of the target (80) defined with respect to a predefined reference coordinate system (99) associated with the scene (100),
wherein the radar measurement dataset (752) comprises a time series of frames (760), each frame of the time series of frames (760) being indicative of the depth positions of the respective data points of the scene (100) at a respective point in time,
wherein the at least one neural network algorithm (500, 500-1, 500-2, 500-3) comprises multiple neural network algorithms included in multiple cells (581, 582, 583) of a super-network (510) with recurrent structure,
the method being **characterised in that** the output dataset (753) comprises a time series of multiple position estimates (788) of the target (80) defined with respect to the predefined reference coordinate system (99), the time series of the multiple position estimates (788) being associated with the time series of frames (760),
wherein the super-network (510) augments the output dataset (753) with inferred velocity estimates (789) of the target (80).

2. The computer-implemented method of claim 1, further comprising:
- post-processing the output dataset (753) to classify the multiple position estimates (788) and optionally the inferred velocities estimates (789) with respect to predefined gesture classes.

3. The computer-implemented method of claim 2,
wherein the predefined gesture classes are selected from the group consisting of: a static rest gesture (62) of the target (80); and a movement gesture (61) of the target (80).

4. The computer-implemented method of any one of the preceding claims,
wherein the radar measurement dataset (752) is not indicative of velocities (31, 32, 33) of the data points of the scene (100).

5. The computer-implemented method of any one of the preceding claims, further comprising:
- removing (5015) velocities (31, 32, 33) from the radar measurement dataset (752) prior to processing the radar measurement dataset (752) using the at least one neural network algorithm (500, 500-1, 500-2, 500-3).

6. The computer-implemented method of any one of claims 1 to 5,
wherein the one or more position estimates (788) of the target (80) are specified by the output dataset (753) using continuous coordinates of the reference coordinate system (99),
wherein the at least one neural network algorithm (500, 500-1, 500-2, 500-3) comprises a regression layer to provide the continuous coordinates.

7. The computer-implemented method of any one of claims 1 to 5,
wherein the one or more position estimates (788) of the target (80) are specified by the output dataset (753) using discretized coordinates of the reference coordinate system (99),
wherein the discretized coordinates are associated with one or more input elements (111, 112, 113) of a user interface (110), the one or more input elements (111, 112, 113) having predefined locations in the reference coordinate system (99),
wherein the at least one neural network algorithm (500, 500-1, 500-2, 500-3) comprises a classifier layer to provide the discretized coordinates (111, 112, 113).

8. The computer-implemented method of any one of the preceding claims,
wherein the radar measurement dataset (752) comprises a 3-D point cloud (752-1) comprising a plurality of 3-D points, the plurality of 3-D points implementing the data points,
wherein the at least one neural network algorithm (500, 500-1, 500-2, 500-3) is selected from the group consisting of: graph convolutional neural network; or independent points approach network.

9. The computer-implemented method of any one of the preceding claims,
wherein the radar measurement dataset (752) comprises a 2-D map (752-2) comprising a plurality of pixels, the plurality of pixels implementing the data points,
wherein the at least one neural network algorithm (500, 500-1, 500-2, 500-3) is implemented by a convolutional neural network.

10. The computer-implemented method of any one of the preceding claims,
wherein the scene (100) further comprises at least one of scene clutter (81) or noise (21) associated with a measurement process of the radar unit (70), the at least one neural network algorithm (500, 500-1, 500-2, 500-3) being trained to denoise the scene (100) by filtering the at least one of the scene clutter (81) or the noise.

11. A computer-implemented method of performing a training of at least one neural network algorithm (500, 500-1, 500-2, 500-3) to process a radar measurement dataset (752) to obtain an output dataset (753) including one or more position estimates (788) of a target (80), the method comprising:
- obtaining multiple training radar measurement datasets indicative of depth positions of data points of a scene (100) observed by a radar unit, the scene (100) comprising the target (80), the target (80) being selected from the group consisting of a hand, a part of a hand, and a handheld object,
- obtaining ground-truth labels for the multiple training radar measurement datasets, the ground-truth labels (801) each comprising one or more positions of the target (80) defined with respect to a predefined reference coordinate system (99) associated with the scene (100), and
- performing the training based on the multiple training radar measurement datasets and the ground-truth labels (801),
wherein the radar measurement dataset (752) comprises a time series of frames (760), each frame of the time series of frames (760) being indicative of the depth positions of the respective data points of the scene (100) at a respective point in time,
wherein the at least one neural network algorithm (500, 500-1, 500-2, 500-3) comprises multiple neural network algorithms included in multiple cells (581, 582, 583) of a super-network (510) with recurrent structure, the method being **characterised in that** the output dataset (753) comprises a time series of multiple position estimates (788) of the target (80) defined with respect to the predefined reference coordinate system (99), the time series of the multiple position estimates (788) being associated with the time series of frames (760),
wherein the super-network (510) augments the output dataset (753) with inferred velocity estimates (789) of the target (80).

12. The computer-implemented method of claim 11,
wherein the scene (100) further comprises clutter (81) associated with background objects.

13. The computer-implemented method of claim 11 or 12,
wherein at least some of the multiple training radar measurement datasets each comprise a time series of frames (760) associated with a time duration during which the target (80) performs a static rest gesture (62), each frame of the time series of frames (760) being indicative of the depth positions of the respective data points of the scene (100) at a respective point in time during the time duration,
wherein the depth positions of the respective data points of the scene (100) associated with the target (80) at the points in time during the time duration exhibit a motion blur (21), the motion blur being associated with movement of the target or scene clutter (81).

## Patentansprüche

1. Computerimplementiertes Verfahren, das umfasst:
- Erhalten (5001) eines Radarmessdatensatzes (752), der Tiefenpositionen von Datenpunkten einer Szene (100) angibt, die von einer Radareinheit (70) beobachtet wird, wobei die Szene (100) ein Ziel (80) umfasst, wobei das Ziel (80) aus der Gruppe ausgewählt ist, die aus einer Hand, einem Teil einer Hand und einem handgehaltenen Objekt besteht, und
- Verarbeiten (5020) des Radarmessdatensatzes (752) unter Verwendung mindestens eines neuronalen Netzwerkalgorithmus (500, 500-1, 500-2, 500-3), um einen Ausgabedatensatz (753) zu erhalten, wobei der Ausgabedatensatz (753) eine oder mehrere Positionsschätzungen (788) des Ziels (80) umfasst, die in Bezug auf ein vordefiniertes Referenzkoordinatensystem (99) definiert sind, das der Szene (100) zugeordnet ist,
wobei der Radarmessdatensatz (752) eine Zeitreihe von Rahmen (760) umfasst, wobei jeder Rahmen der Zeitreihe von Rahmen (760) die Tiefenpositionen der jeweiligen Datenpunkte der Szene (100) zu einem jeweiligen Zeitpunkt angibt,
wobei der mindestens eine neuronale Netzwerkalgorithmus (500, 500-1, 500-2, 500-3) mehrere neuronale Netzwerkalgorithmen umfasst, die in mehreren Zellen (581, 582, 583) eines Supernetzwerks (510) mit rekurrenter Struktur enthalten sind,
wobei das Verfahren **dadurch gekennzeichnet ist, dass** der Ausgabedatensatz (753) eine Zeitreihe mehrerer Positionsschätzungen (788) des Ziels (80) umfasst, die in Bezug auf das vordefinierte Referenzkoordinatensystem (99) definiert sind, wobei die Zeitreihe der mehreren Positionsschätzungen (788) der Zeitreihe der Rahmen (760) zugeordnet ist,
wobei das Supernetzwerk (510) den Ausgabedatensatz (753) mit abgeleiteten Geschwindigkeitsabschätzungen (789) des Ziels (80) ergänzt.

2. Computerimplementiertes Verfahren nach Anspruch 1, das ferner umfasst:
- Nachbearbeiten des Ausgabedatensatzes (753), um die mehreren Positionsschätzungen (788) und optional die abgeleiteten Geschwindigkeitsabschätzungen (789) in Bezug auf vordefinierte Gestenklassen zu klassifizieren.

3. Computerimplementiertes Verfahren nach Anspruch 2,
wobei die vordefinierten Gestenklassen aus der Gruppe ausgewählt werden, die besteht aus: einer statischen Ruhegeste (62) des Ziels (80); und einer Bewegungsgeste (61) des Ziels (80).

4. Computerimplementiertes Verfahren nach einem der vorstehenden Ansprüche,
wobei der Radarmessdatensatz (752) keine Geschwindigkeiten (31, 32, 33) der Datenpunkte der Szene (100) angibt.

5. Computerimplementiertes Verfahren nach einem der vorstehenden Ansprüche, das ferner umfasst:
- Entfernen (5015) von Geschwindigkeiten (31, 32, 33) aus dem Radarmessdatensatz (752) vor der Verarbeitung des Radarmessdatensatzes (752) unter Verwendung des mindestens einen neuronalen Netzwerkalgorithmus (500, 500-1, 500-2, 500-3) .

6. Computerimplementiertes Verfahren nach einem der Ansprüche 1 bis 5,
wobei die eine oder die mehreren Positionsschätzungen (788) des Ziels (80) durch den Ausgabedatensatz (753) unter Verwendung kontinuierlicher Koordinaten des Referenzkoordinatensystems (99) spezifiziert werden,
wobei der mindestens eine neuronale Netzwerkalgorithmus (500, 500-1, 500-2, 500-3) eine Regressionsschicht umfasst, um die kontinuierlichen Koordinaten bereitzustellen.

7. Computerimplementiertes Verfahren nach einem der Ansprüche 1 bis 5,
wobei die eine oder die mehreren Positionsschätzungen (788) des Ziels (80) durch den Ausgabedatensatz (753) unter Verwendung diskretisierter Koordinaten des Referenzkoordinatensystems (99) spezifiziert werden,
wobei die diskretisierten Koordinaten einem oder mehreren Eingabeelementen (111, 112, 113) einer Benutzerschnittstelle (110) zugeordnet sind, wobei das eine oder die mehreren Eingabeelemente (111, 112, 113) vordefinierte Positionen im Referenzkoordinatensystem (99) haben,
wobei der mindestens eine neuronale Netzwerkalgorithmus (500, 500-1, 500-2, 500-3) eine Klassifizierungsschicht umfasst, um die diskretisierten Koordinaten (111, 112, 113) bereitzustellen.

8. Computerimplementiertes Verfahren nach einem der vorstehenden Ansprüche,
wobei der Radarmessdatensatz (752) eine 3D-Punktwolke (752-1) umfasst, die eine Vielzahl von 3D-Punkten umfasst, wobei die Vielzahl von 3D-Punkten die Datenpunkte implementiert,
wobei der mindestens eine neuronale Netzwerkalgorithmus (500, 500-1, 500-2, 500-3) aus der Gruppe ausgewählt ist, die besteht aus: einem Graph-Convolutional-Neuronalen Netzwerk; oder einem Netzwerk mit unabhängigen Punkten.

9. Computerimplementiertes Verfahren nach einem der vorstehenden Ansprüche,
wobei der Radarmessdatensatz (752) eine 2D-Karte (752-2) umfasst, die eine Vielzahl von Bildpunkten umfasst, wobei die Vielzahl von Bildpunkten die Datenpunkte implementiert, wobei der mindestens eine neuronale Netzwerkalgorithmus (500, 500-1, 500-2, 500-3) durch ein Faltungsneuronales Netzwerk implementiert wird.

10. Computerimplementiertes Verfahren nach einem der vorstehenden Ansprüche,
wobei die Szene (100) ferner mindestens eine Szenenverunreinigung (81) oder Rauschen (21) umfasst, die mit einem Messvorgang der Radareinheit (70) verbunden sind, wobei der mindestens eine neuronale Netzwerkalgorithmus (500, 500-1, 500-2, 500-3) darauf trainiert ist, die Szene (100) durch Filtern der mindestens einen der Szenenverunreinigung (81) oder des Rauschens zu entrauschen.

11. Computerimplementiertes Verfahren zum Durchführen eines Trainings mindestens eines neuronalen Netzwerkalgorithmus (500, 500-1, 500-2, 500-3) zum Verarbeiten eines Radarmessdatensatzes (752), um einen Ausgabedatensatz (753) zu erhalten, der eine oder mehrere Positionsschätzungen (788) eines Ziels (80) enthält, wobei das Verfahren umfasst:
- Erhalten mehrerer Trainings-Radarmessdatensätze, die Tiefenpositionen von Datenpunkten einer Szene (100) angeben, die von einer Radareinheit beobachtet wird, wobei die Szene (100) das Ziel (80) umfasst, wobei das Ziel (80) aus der Gruppe ausgewählt ist, die aus einer Hand, einem Teil einer Hand und einem handgehaltenen Objekt besteht,
- Erhalten von Ground-Truth-Labels für die mehreren Trainingsradarmessdatensätze, wobei die Ground-Truth-Labels (801) jeweils eine oder mehrere Positionen des Ziels (80) umfassen, die in Bezug auf ein vordefiniertes Referenzkoordinatensystem (99) definiert sind, das der Szene (100) zugeordnet ist, und
- Durchführen des Trainings auf der Grundlage der mehreren Trainingsradarmessdatensätze und der Ground-Truth-Labels (801),
wobei der Radarmessdatensatz (752) eine Zeitreihe von Rahmen (760) umfasst, wobei jeder Rahmen der Zeitreihe von Rahmen (760) die Tiefenpositionen der jeweiligen Datenpunkte der Szene (100) zu einem jeweiligen Zeitpunkt angibt,
wobei der mindestens eine neuronale Netzwerkalgorithmus (500, 500-1, 500-2, 500-3) mehrere neuronale Netzwerkalgorithmen umfasst, die in mehreren Zellen (581, 582, 583) eines Supernetzwerks (510) mit rekurrenter Struktur enthalten sind, wobei das Verfahren **dadurch gekennzeichnet ist, dass** der Ausgabedatensatz (753) eine Zeitreihe mehrerer Positionsschätzungen (788) des Ziels (80) umfasst, die in Bezug auf das vordefinierte Referenzkoordinatensystem (99) definiert sind, wobei die Zeitreihe der mehreren Positionsschätzungen (788) der Zeitreihe der Rahmen (760) zugeordnet ist,
wobei das Supernetzwerk (510) den Ausgabedatensatz (753) mit abgeleiteten Geschwindigkeitsabschätzungen (789) des Ziels (80) ergänzt.

12. Computerimplementiertes Verfahren nach Anspruch 11,
wobei die Szene (100) ferner eine mit Hintergrundobjekten verbundene Verunreinigung (81) umfasst.

13. Computerimplementiertes Verfahren nach Anspruch 11 oder 12,
wobei mindestens einige der mehreren Trainingsradarmessdatensätze jeweils eine Zeitreihe von Rahmen (760) umfassen, die einer Zeitdauer zugeordnet sind, während der das Ziel (80) eine statische Ruhegeste (62) ausführt, wobei jeder Rahmen der Zeitreihe von Rahmen (760) die Tiefenpositionen der jeweiligen Datenpunkte der Szene (100) zu einem jeweiligen Zeitpunkt während der Zeitdauer angibt, wobei die Tiefenpositionen der jeweiligen Datenpunkte der Szene (100), die mit dem Ziel (80) zu den Zeitpunkten während der Zeitdauer verbunden sind, eine Bewegungsunschärfe (21) aufweisen, wobei die Bewegungsunschärfe mit einer Bewegung des Ziels oder einer Szenenverunreinigung (81) verbunden ist.

## Revendications

1. Un procédé mis en œuvre par ordinateur, comprenant :
- obtenir (5001) un ensemble (752) de données de mesure radar indiquant des positions en profondeur de points de données d'une scène (100) observée par une unité (70) radar, la scène (100) comprenant une cible (80), la cible (80) étant choisie dans le groupe consistant en une main, une partie d'une main et un objet tenu à la main, et
- traiter (5020) l'ensemble (752) de données de mesure radar en utilisant au moins un algorithme (500, 500-1, 500-2, 500-3) de réseau neuronal pour obtenir un ensemble (753) de données de sortie, l'ensemble (753) de données de sortie comprenant une ou plusieurs estimations (788) de position de la cible (80) définies par rapport à un système (99) de coordonnées de référence défini à l'avance associé à la scène (100),
dans lequel l'ensemble (752) de données de mesure radar comprend une série temporelle de trames (760), chaque trame de la série temporelle de trames (760) indiquant les positions en profondeur des points de données respectifs de la scène (100) à un point dans le temps respectif,
dans lequel le au moins un algorithme (500, 500-1, 500-2, 500-3) de réseau neuronal comprend de multiples algorithmes de réseau neuronal inclus dans de multiples cellules (581, 582, 583) d'un super réseau (510) ayant une structure récurrente,
le procédé étant **caractérisé en ce que** l'ensemble (753) de données de sortie comprend une série temporelle de multiples estimations (788) de position de la cible (80) définies par rapport au système (99) de coordonnées de référence défini à l'avance, la série temporelle des multiples estimations (788) de position étant associée à la série temporelle de trames (760),
dans lequel le super réseau (510) augmente l'ensemble (753) de données de sortie par des estimations (789) inférées de vitesse de la cible (80).

2. Le procédé mis en œuvre par ordinateur de la revendication 1, comprenant en outre :
- post-traitement de l'ensemble (753) de données de sortie pour classer les multiples estimations (788) de position et éventuellement les estimations (789) inférées de vitesse par rapport à des classes de geste définies à l'avance.

3. Le procédé mis en œuvre par ordinateur de la revendication 2,
dans lequel les classes de geste définies à l'avance sont sélectionnées dans le groupe consistant en : un geste (62) de repos statique de la cible (80) ; et un geste (61) de mouvement de la cible (80).

4. Le procédé mis en œuvre par ordinateur de l'une quelconque des revendications précédentes,
dans lequel l'ensemble (752) de données de mesure radar n'indique pas des vitesses (31, 32, 33) des points de données de la scène (100).

5. Le procédé mis en œuvre par ordinateur de l'une quelconque des revendications précédentes, comprenant en outre :
- retirer (5015) des vitesses (31, 32, 33) de l'ensemble (752) de données de mesure radar avant de traiter l'ensemble (752) de données de mesure radar en utilisant le au moins un algorithme (500, 500-1, 500-2, 500-3) de réseau neuronal.

6. Le procédé mis en œuvre par ordinateur de l'une quelconque des revendications 1 à 5,
dans lequel la une ou les plusieurs estimations (788) de position de la cible (80) sont précisées par l'ensemble (753) de données de sortie en utilisant des coordonnées continues du système (99) de coordonnées de référence,
dans lequel le au moins un algorithme (500, 500-1, 500-2, 500-3) de réseau neuronal comprend une couche de régression pour donner les coordonnées continues.

7. Le procédé mis en œuvre par ordinateur de l'une quelconque des revendications 1 à 5,
dans lequel la une ou les plusieurs estimations (788) de positions de la cible (80) sont précisées par l'ensemble (753) de données de sortie en utilisant des coordonnées discrétisées du système (99) de coordonnées de référence,
dans lequel les coordonnées discrétisées sont associées à un ou à plusieurs éléments (111, 112, 113) d'entrée d'une interface (110) d'utilisateur, le un ou les plusieurs éléments (111, 112, 113) d'entrée ayant des emplacements définis à l'avance dans le système (99) de coordonnées de référence,
dans lequel le au moins un algorithme (500, 500-1, 500-2, 500-3) de réseau neuronal comprend une couche de classeur pour donner les coordonnées (111, 112, 113) discrétisées.

8. Le procédé mis en œuvre par ordinateur de l'une quelconque des revendications précédentes,
dans lequel l'ensemble (752) de données de mesure radar comprend un nuage (752-1) de points en 3D, comprenant une pluralité de points en 3D, la pluralité de points en 3D mettant en œuvre les points de données,
dans lequel le au moins un algorithme (500, 500-1, 500-2, 500-3) de réseau neuronal est sélectionné dans le groupe consistant en : un réseau neuronal de convolution de graphe ; ou un réseau d'approche de points indépendants.

9. Le procédé mis en œuvre par ordinateur de l'une quelconque des revendications précédentes,
dans lequel l'ensemble (752) de données de mesure radar comprend une carte (752-2) en 2D comprenant une pluralité de pixels, la pluralité de pixels mettant en œuvre les points de données,
dans lequel le au moins un algorithme (500, 500-1, 500-2, 500-3) de réseau neuronal est mis en œuvre par un réseau neuronal de convolution.

10. Le procédé mis en œuvre par ordinateur de l'une quelconque des revendications précédentes,
dans lequel la scène (100) comprend en outre au moins l'un d'un écho parasite (81) de scène ou du bruit (21) associé à une opération de mesure de l'unité (70) radar, le au moins un algorithme (500, 500-1, 500-2, 500-3) de réseau neuronal étant entraîné pour débruiter la scène (100) en filtrant le au moins un écho parasite (81) de la scène ou le bruit.

11. Un procédé mis en œuvre par ordinateur pour effectuer un entraînement d'au moins un algorithme (500, 500-1, 500-2, 500-3) de réseau neuronal pour traiter un ensemble (752) de données de mesure radar, afin d'obtenir un ensemble (753) de données de sortie comprenant une ou plusieurs estimations (788) de position d'une cible (80), le procédé comprenant :
- obtenir de multiples ensembles de données de mesure radar d'entraînement indiquant des positions en profondeur de points de données d'une scène (100), la scène (100) comprenant la cible (80), la cible (80) étant sélectionnée dans le groupe consistant en une main, une partie d'une main et un objet tenu à la main,
- obtenir des marques de vérité de terrain pour les multiples ensembles de données de mesure radar d'entraînement, les marques (801) de vérité de terrain comprenant chacune une ou plusieurs positions de la cible (80) définies par rapport à un système (99) de coordonnées de référence défini à l'avance associé à la scène (100), et
- effectuer l'entraînement sur la base des multiples ensembles de données de mesure radar d'entraînement et des marques (801) de vérité de terrain,
dans lequel l'ensemble (752) de données de mesure radar comprend une série temporelle de trames (760), chaque trame de la série temporelle de trames (760) indiquant les positions en profondeur des points de données respectifs de la scène (100) à un point dans le temps respectif,
dans lequel le au moins un algorithme (500, 500-1, 500-2, 500-3) de réseau neuronal comprend de multiples algorithmes de réseau neuronal inclus dans de multiples cellules (581, 582, 583) d'un super réseau (510) ayant une structure récurrente,
le procédé étant **caractérisé en ce que** l'ensemble (753) de données de sortie comprend une série temporelle de multiples estimations (788) de position de la cible (80) définies par rapport au système (99) de coordonnées de référence défini à l'avance, la série temporelle des multiples estimations (788) de position étant associée à la série temporelle de trames (760),
dans lequel le super réseau (510) augmente l'ensemble (753) de données de sortie par des estimations (789) inférées de vitesse de la cible (80).

12. Le procédé mis en œuvre par ordinateur de la revendication 11,
dans lequel la scène (100) comprend en outre des échos parasites (81) associés à des objets d'arrière-plan.

13. Le procédé mis en œuvre par ordinateur de la revendication 11 ou 12,
dans lequel au moins certains des multiples ensembles de données de mesure radar d'entraînement comprennent chacun une série temporelle de trames (760) associée à une durée pendant laquelle la cible (80) effectue un geste (62) de repos statique, chaque trame de la série temporelle de trames (760) indiquant les positions en profondeur des points de données respectifs de la scène (100) à un point dans le temps respectif pendant la durée,
dans lequel les positions en profondeur des points de données respectifs de la scène (100) associée à la cible (80) aux points dans le temps pendant la durée présentant un flou (21) de mouvement, le flou de mouvement étant associé au mouvement de la cible ou à un écho parasite (81) de la scène.
